# EUROPEAN PATENT APPLICATION

(11) **EP 1 832 973 A2**
(43) Date of publication of application: **12.09.2007**
(21) Application number: 07103795.6
(22) Date of filing: 08.03.2007
(51) Int. Cl.: G06F 3/12

(54) **Printing system**

(30) Priority: 09.03.2006 GB 0604801
(71) Applicant: CANON EUROPA N.V., NL-1185 XB Amstelveen (NL)
(72) Inventor: Roberts, Howard, Uxbridge, Middlesex UB11 1JA (GB); Cudd, Richard, Uxbridge, Middlesex UB11 1JA (GB); Kujirai, Yasuhiro, Uxbridge, Middlesex UB11 1JA (GB)
(74) Representative: Sharp, Alan Cooper

(57) **Abstract**

A printing apparatus is disclosed, the printing apparatus comprising: an input for receiving a plurality of first documents in electronic form, each first document including an identifier of a respective one of a plurality of groups, and a controller adapted to generate a first print instruction for printing each received first document with first differentiation means between successively printed first documents having a different identifier, or category of identifier, the identifiers having been assigned to a plurality of categories, and without first differentiation means between successively printed first documents having the same identifier or category of identifier. A method of operating a printing apparatus, and a computer software product for implementing the method, are also disclosed.

## Description

The present invention relates to a method of operating a printing apparatus in a computer network, a printing system, a printing apparatus and a computer program product for use in a printing method.

In computer network printing it is common to use a printing apparatus that can be selectively used as a photocopier, a facsimile printer, or a scanner, etc.. Such a printing apparatus is known in the art as a multifunctional peripheral (MFP) device within the networked computer system.

Job sorters are hardware add-ons to known MFP devices. A known job sorter contains multiple output bins in which documents can be placed when printed. For example, bin A might be used for documents printed by the Legal department in a company, bin B might be used for documents printed by the Human Resources (HR) department and bin C might be used by the Finance department. A document is directed to an output bin using a print command that is embedded in the print job. Such a job sorter provides the ability for different documents to be sorted automatically. Consequently an MFP device provided with such a job sorter is very convenient to use, for example in an office where plural departments are sharing the same MFP.

However, that known job sorter suffers from the problem that job sorters are expensive pieces of hardware both to build and maintain.

In contrast to such a job sorter, a standard MFP may often only have a simple print stacker that may have only one or two output bins. This device, while less expensive than a job sorter, does not provide hardware to achieve different documents being sorted automatically. In order to overcome this problem, while maintaining lower hardware cost, the concept of printer mailboxes has been devised.

Instead of a document being printed out directly, the print job is sent to a mailbox on the MFP where it is stored. A user must physically walk up to the MFP and operate the MFP in order to print out the document from the mailbox. It should be clear to those skilled in the art that the mailboxes can be used in a similar fashion as the sorter bins of a job sorter. For example, mailbox 1 might be used for documents printed by the Legal department in a company, mailbox 2 might be used for documents printed by the HR department, and so on.

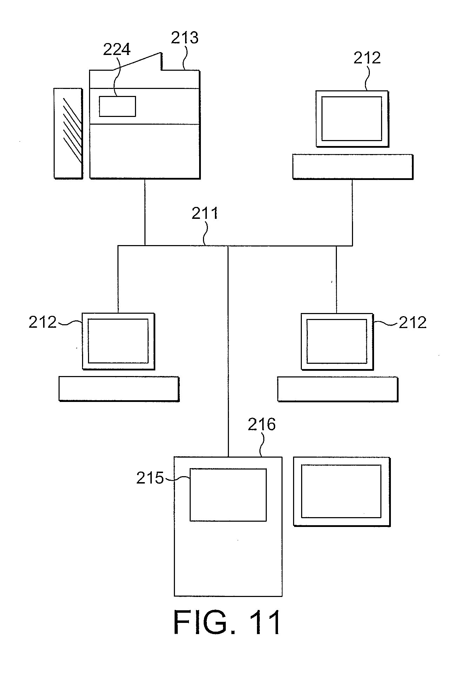

Figure 11 shows a known computer network system typical of those in which the invention is used. A network 211 has connected to it several computer workstations 212, a multifunctional peripheral (MFP) device 213, and a server 214. The server 214 is a network server that contains a security program module 215 including identity details for users of the network system. The MFP has a user interface in the form of a touch-sensitive screen 224 through which the user can control the peripheral device.

The workstations 212 are, for example, standard personal computers. If a user wishes to use one of the workstations 212, they must first log on, by entering their username and password into the workstation 212. These are then transmitted to and checked by the security program 215 on the server 214, and if they are correct the user is logged on. This kind of log on is usually referred to as "logging on to the network" and gives the user access to the workstation and server resources. The server 214 may be, for example a server running an operating system such as Windows Server 2003^{™} or Red Hat Linux^{™}. In Windows 2003 the security module that identifies users and verifies log ons is called Active Directory^{™}.

The MFP 213, is, for example, a Canon MFP from the iR 5000-6000i series. The MFP 213 has a control unit (not shown) that contains a microprocessor (not shown) which runs the Multifunctional Embedded Application Platform (MEAP) as is known in the art. The MEAP platform allows applications written in a Java-type language to be installed and run on the MFP 213 (these are known as "MEAP applications"). These applications can then control the operation of the MFP 213, and can display information to and receive input from a user via the touch-sensitive screen 224.

The MFP 213 also contains a hard disc (not shown) on which a number of print jobs can be stored prior to printing. Each print job contains a variety of information, including the actual content to be printed, the identity of the user who printed the document, etc.. The print jobs are stored in a number of separate storage areas on the hard disc, which are known as "mailboxes"; these mailboxes can be used by MEAP applications. On one particular MFP of the iR 5000-6000i series there are 100 mailboxes, each of which can hold up to 100 print jobs. Different MFPs may have different numbers of mailboxes, with different storage capabilities. However the structure and sizes of the mailboxes are fixed by the architecture of the MFP control system. Mailboxes can be assigned a name and/or a "PIN" number. Access to the contents of a mailbox can be restricted by use of a PIN number, for example by requiring a user to enter the PIN on the touch-sensitive screen 224.

Any of the workstations 212 is able to print documents on the MFP 213 via the network 211. The settings used for printing a document are controlled on the workstation 212 by a printer driver and a user interface (not shown). Amongst other things, a user can control the destination of a document.

The user can select a mailbox on the MFP 213 in which to store the print job prior to printing. Typically, a mailbox will be assigned to a person or set of people, and given a PIN number. Only that person or set of people will know the PIN for that mailbox, and so they are able to store their print jobs on the MFP without them being accessible to other people.

Once a document has been "printed" (i.e. sent) from the workstation 212 and the print job stored on the MFP 213 in the respective mailbox, the user can at a later time access their mailbox from the MFP 213, using their PIN, and cause the document to be actually printed out onto paper. In this way they are able to get a hard copy of their document without it being accessible to people who do not have the PIN number. This is all done using the standard functionality of the MEAP platform.

However, such a known mailbox functionality suffers from the problem that it does not allow the documents to be printed out until a user physically walks up to the MFP and initiates the print. There is also a problem that there is no simple way to print all the jobs which are stored in all the mailboxes. In some situations, the ability to print all of the stored documents is desirable, for example when a large number of documents are to be printed and sorted during an overnight batch print, when users are absent.

JP-A-11199124 discloses a printer in which plural prints are sorted by the number of copies to be printed without providing a sorter or shifter. A printer is provided with trays for feeding the same size sheets in either a long direction or a short direction. Alternate copies (those with an even number) are printed long sided and any copy with an odd number is printed short sided. However, this disclosure does not address or solve the problem of printing documents originating from different senders, corresponding to different departments in an office, for example, using a networked computer system with a common printer, so that they can be readily distinguished, even if they have all been printed in a single overnight run. The printer does not distinguish between different groups of documents.

JP-A-2000/115449 discloses a multifunctional printer that can print photocopies, faxes, etc. without requiring a sorter. For each printing mode, the image or the paper is rotated (by 90 degrees or multiples thereof) to a respective orientation that is dependent upon the output mode. The printer does not distinguish between different groups of documents. Again, this disclosure does not address or solve the problem of printing documents originating from different senders, corresponding to different departments in an office, for example, using a networked computer system with a common printer, so that they can be readily distinguished, even if they have all been printed in a single overnight run.

JP-A-11346291 discloses a printer which is provided with a sorter. Documents are printed face down to respective bins of the sorter. A further dedicated bin is provided into which a cover sheet is printed face up. The cover sheet is printed with a report indicating which documents are printed in the respective bins. This disclosure does not address or solve the problem of printing documents on a printer that does not have plural bins. The disclosure also does not address or solve the problem of printing documents originating from different senders, corresponding to different departments in an office, for example, using a networked computer system with a common printer, so that they can be readily distinguished, even if they have all been printed into a single bin, in a single overnight run.

EP-A-0585075 discloses a facsimile printer which is provided with a sorter. Documents are printed to respective bins of the sorter, each bin being designated to a respective recipient. When a fax is received, a cover sheet is first printed indicating an assigned bin number. The cover sheet is then scanned, and the bin number thereon is identified. The identification is used to designate the bin to which the sheets of the fax are to be printed. Again, this disclosure does not address or solve the problem of printing documents on a printer that does not have plural bins. The disclosure also does not address or solve the problem of printing documents originating from different senders, corresponding to different departments in an office, for example, using a networked computer system with a common printer, so that they can be readily distinguished, even if they have all been printed into a single bin, in a single overnight run.

It is also known to print documents to a single bin, with each document being separated from the next document by a separator page. The separator page is used to identify different documents, but the system does not collate documents from each user or group of users. The system does not therefore address or solve the problem of printing documents originating from different senders, corresponding to different departments in an office, for example, using a networked computer system with a common printer, so that they can be readily distinguished, even if they have all been printed into a single bin, in a single overnight run.

The present invention aims to overcome, at least part, some of these problems with known network printing systems and printers.

Accordingly, in one aspect the present invention provides a printing apparatus comprising: an input for receiving a plurality of first documents in electronic form, each first document including an identifier of a respective one of a plurality of groups, and a controller adapted to generate a first print instruction for printing each received first document with first differentiation means between successively printed first documents having a different identifier or category of identifier, the identifiers having been assigned to a plurality of categories, and without first differentiation means between successively printed first documents having the same identifier or category of identifier.

In another aspect the present invention also provides a method of operating a printing apparatus in a computer network, the method comprising the steps of: receiving a plurality of first documents in electronic form, each first document including an identifier of a respective one of a plurality of groups, and printing the received first documents with first differentiation means between successively printed first documents having a different identifier or category of identifier, the identifiers having been assigned to a plurality of categories, and without first differentiation means between successively printed first documents having the same identifier or category of identifier.

In a further aspect the present invention provides a computer program product comprising program code means which, when executed by a computer, performs the step of sending, on receipt of a print command, first documents in electronic form, each including an identifier of a respective one of a plurality of groups, to be printed with first differentiation means between successively printed first documents having a different identifier or category of identifier, the identifiers having been assigned to a plurality of categories, and without first differentiation means between successively printed first documents having the same identifier or category of identifier.

Particularly preferred features of the various aspects of the present invention are defined in the dependent claims.

Embodiments of the present invention will now be described by way of example with reference to the accompanying drawings, in which:
Figure 1 is a schematic block diagram of a printing apparatus in accordance with a first embodiment of the present invention;
Figure 2 is a schematic diagram of a first example of a configuration of sheets outputted from the printing engine of the printing apparatus of Figure 1;
Figure 3 is a schematic diagram of a second example of a configuration of sheets outputted from the printing engine of the printing apparatus of Figure 1;
Figure 4 is a schematic diagram of a third example of a configuration of sheets outputted from the printing engine of the printing apparatus of Figure 1;
Figure 5 is a schematic flow diagram of a routine for printing documents to mailboxes in the printing apparatus of Figure 1;
Figure 6 is a schematic flow diagram of a routine for printing sheets from the print jobs in the mailboxes using the printing apparatus of Figure 1;
Figure 7 is a schematic flow diagram of a routine for printing sheets from the print jobs in the mailboxes using a printing apparatus in accordance with a second embodiment of the present invention.
Figure 8 is a schematic block diagram of a printing apparatus in accordance with a third embodiment of the present invention;
Figure 9 is a schematic diagram of an example of a configuration of sheets outputted from the printing engine of the printing apparatus of Figure 7;
Figure 10 is a schematic flow diagram of a routine for producing a print command in a computer for sending to a printing apparatus in accordance with a fourth embodiment of the present invention; and
Figure 11 is a schematic block diagram of a known computer network system incorporating a multifunctional peripheral (MFP) device.

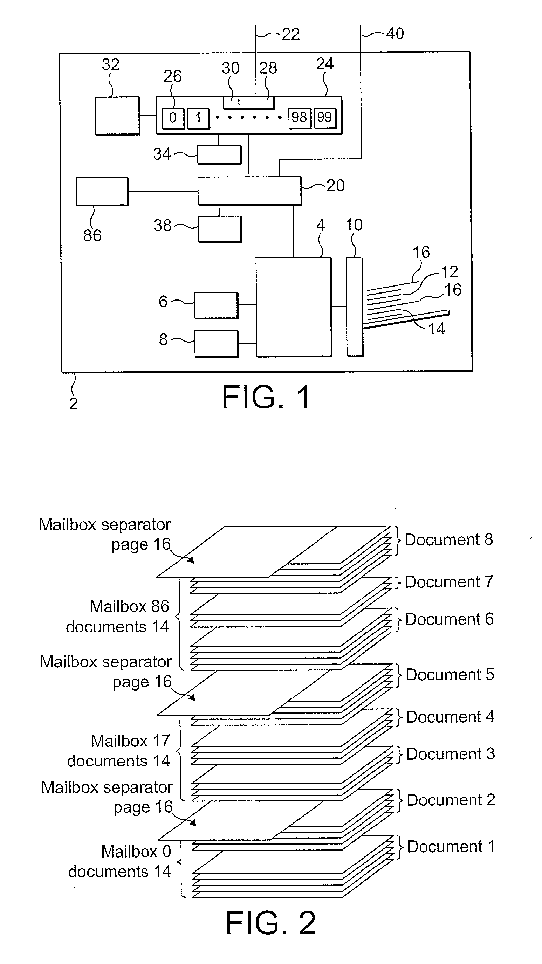

Referring to Figure 1, there is shown a schematic block diagram of a printing apparatus, being a multifunctional peripheral (MFP) of a network printing system, in accordance with a first embodiment of the present invention. The printing apparatus, designated generally as 2, includes a printing engine 4 which is adapted selectively to take paper sheets 12 stored in two paper trays 6,8, print the sheets 12 and output them to a bin 10. In the illustrated embodiment, the bin 10 comprises a single bin. However, additional bins may be provided, although fundamentally the invention is directed to a printing system which only requires a single bin. The printed sheets 12 are stacked in the bin or stacker 10.

As described in detail hereinafter, the printed sheets in the bin 10 include first documents 14, which are documents that have been prepared by and printed out by a user. The sheets in the bin 10 also include second documents 16 in the form of separator pages which, as described hereinafter, physically separate some first documents 14 from other first documents 14. The separator pages 16 may be printed so as to carry a printed image or unprinted. The separator pages 16 can easily be visually distinguished from the printed documents 14 by comprising differently sized, oriented and/or coloured paper from the paper used to print the printed documents 14. Accordingly, one of the paper trays 6 stores paper sheets 12 intended to print the documents 14 and another of the paper trays 8 stores paper sheets 12 for the separator pages 16.

The printing engine 4 is controlled by a control unit 20. The printing apparatus 2 has an input 22 for receiving a plurality of first documents to be printed in electronic form, the documents being received in the form of a print job along a cable, for example, connected to the computer network or via a wireless connection. The input 22 is connected to a data store 24 for storing the print jobs, for example being a hard disc. The data store 24 has a plurality of data storage spaces 26, each of which constitutes a respective "mailbox" as described hereinabove. In the illustrated embodiment, there are 100 mailboxes 26 numbered from 0 to 99. Each mailbox 26 or group of mailboxes is associated with a respective user or type or class of users, such as a department in a company. The data store 24 therefore constitutes a mailbox system within the printing apparatus 2.

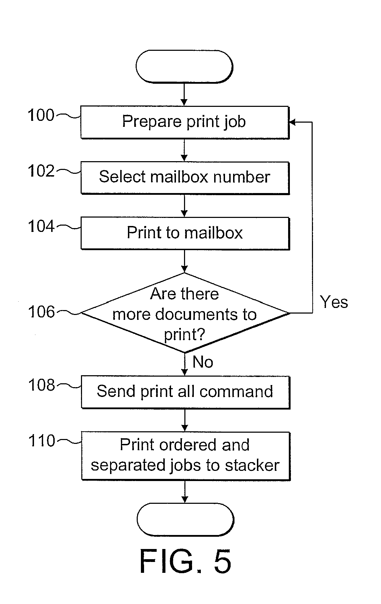

A control program is stored in control unit 20 and, when executed by the control unit 20, performs the steps shown in Figures 5, 6, 7 and 9, hereinafter described.

The print jobs include an identifier which corresponds to the respective mailbox 26 to which the respective print job is to be sent for storage within the mailbox system. The data store 24 includes an identification device 28 together with an associated memory 30 for storing details of the various identifiers and their associated mailboxes 26. For each incoming first document, the associated identifier of the document is identified and then, once the identity of the mailbox 26 corresponding to the respective identifier has been selected, a document sorter 32 sorts the print job and assigns each print job into the respective mailbox 26. In this way, all of the incoming print jobs are stored in the correct mailbox 26 for the respective user. A document counter 34 is provided which counts a total number of print jobs stored in the mailboxes 26 in the data store 24.

The data store 24 is connected to the control unit 20 which is provided with a user interface 36 by which a user may control the operation of the printing apparatus 2. A timer 38, which may be in the form of a clock, is connected to the control unit 20. The printing apparatus 2 is also provided with a signal input 40 for the control unit 20, the signal input 40 being for receiving input signals from the computer network (not shown). The signal input 40 receives input signals along a cable in the illustrated embodiment, but may receive input signals via a wireless connection. The input 22 and the signal input 40 may be combined into a common input which receives first documents in electronic form and input signals from the computer network.

The operation of the printing apparatus 2 will now be described.

The printing apparatus 2 is configured and controlled so as to be able automatically to print out the entire contents of all the mailboxes 26 of the printing apparatus 2 (constituting an MFP) and using a mailbox separator page 16, in the form for example of a page that has its orientation rotated as compared to the pages of the first printed documents 14 and/or of different size and/or colour, to separate the first printed documents 14 from each mailbox 26.

The printing apparatus 2 receives a plurality of print jobs on input 22. These print jobs, corresponding to printed first documents 14, are those that have been created by a user and the user has sent the documents for printing. Each print job includes an identifier of a respective one of a plurality of groups, e.g. of users of the computer network. The respective identifier of each first document is identified by the identification device 28. The print jobs are stored in the mailboxes 26, having been sorted into a plurality of groups based on the respective identifier, and then assigned into a respective one of the mailboxes 26. As described above, a respective identifier for each group is stored in the memory 30.

When the print jobs stored in the mailboxes 26 are to be printed, each stored first document is sent to the printing engine 4 in a first print instruction from the control unit 20, the first print instruction including first information concerning at least one of a selected paper property or a selected paper tray 6,8 of the printing apparatus 2. Specifically, the stored first documents in each respective group are sent in a respective first print instruction for the respective group, so that the or each first document of the respective group stored in the respective mailbox 26 is sent to the printing engine 4. A series of first print instructions is sent sequentially to the printing engine 4, whereby all of the first documents stored in the mailbox system are printed in a single printing operation. The plurality of mailboxes 26 are sequentially checked to determine whether any print job is stored therein, and for each mailbox 26 storing at least one print job, the respective at least one first document stored therein is sent to the printing engine 4.

In association with each first print instruction, a second print instruction is sent to the printing engine 4, to cause a second document, i.e. a separator page 16, to be printed in association with the first documents of each group. The second print instruction includes second information concerning at least one of a selected paper property or a selected paper tray in the printing apparatus 2. The first and second information are different, so that, as described earlier, the first documents 14 can be visually distinguished from the separator pages 16.

Preferably, each separator page 16 is printed after the respective first documents 14 of each group. However, the printing order may be reversed.

The following example explains this procedure in greater detail.

One example of a configuration of sheets 14, 16 outputted from the printing engine 4 of the printing apparatus 2 of Figure 1 is illustrated in Figure 2. Documents are printed to the MFP mailboxes as described above. The mailboxes 26 are numbered between 0 and 99. In this example the mailboxes 26 contain the following print jobs:
Mailbox 0:
   Document 1 - 5 pages
   Document 2 - 5 pages
Mailbox 17:
   Document 3 - 4 pages
   Document 4 - 4 pages
   Document 5 - 5 pages
Mailbox 86:
   Document 6 - 5 pages
   Document 7 - 3 pages
   Document 8 - 6 pages

Once all of the documents 1 to 8 have been received in the respective mailboxes 26 of the MFP 2, a command is sent to the MFP 2 to trigger the print of all the documents. This command may be issued by interaction with the user interface 36 on the MFP 2, or by a special print job being sent to the MFP, or it may be issued at a predetermined time recorded in the timer 38 that has been entered by the user at the user interface 36. Alternatively, the command can also be triggered by the document counter 34, which causes the MFP 2 to print the documents stored in the mailboxes 26 once a certain number of print jobs have been received in the mailboxes 26 by the MFP 2.

When the print out command is received by the MFP 2, the first and second print instructions are sent from the control unit 20 to the printing engine 4 to ensure that both the first documents 14 and the associated second documents 16, namely the separator pages, are printed out in a common printing operation. Accordingly, all the documents 1 to 8 are printed out sequentially onto the MFP stacker 10 as printed documents 14, with the mailbox separator page 16 separating, and thereby indicating, the documents from each of the mailboxes 26. The output of the documents 14, 16 on the stacker is shown in Figure 2.

The mailbox separator pages 16 may be printed either before or after the first documents 14. In Figure 2 the separator pages 16 are printed before the first documents 14.

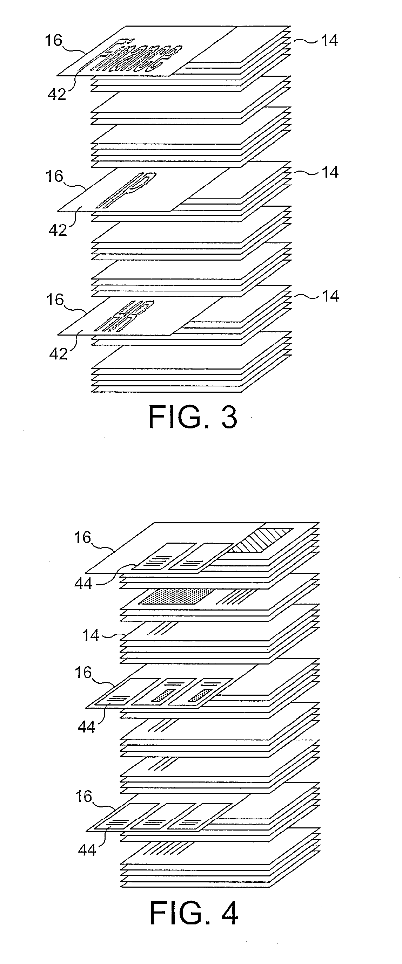

As shown in Figure 2, the separator pages 16 may be unprinted. However, additional information, for example the mailbox number or some other user defined string, may be printed on the separator pages 16. Figure 3 shows an example of a user defined string, in the form of an indication 42 of the name or initials of a department (IP = intellectual property, HR = human resources, finance), which identifies the department in a company for which the documents 14 are intended. This string may be entered via the user interface 36 on the MFP or via a web based interface to the MFP along input 22 or signal input 40. The string may alternatively or additionally include summary information concerning a wide range of details about the print job, including the username of the person that printed the document, the number of pages printed in the printed document, the time at which the document was submitted and/or printed, etc..

Alternatively or additionally, as shown in Figure 4, a thumbnail image 44 of the first page or selection of pages for each of the documents 14 in the respective mailbox 26 may be displayed on the separator page 16. This image 44 would be automatically generated by the MFP 2, because the image 44 may be recorded when printing the respective document 14 and then used subsequently in reduced size to print the thumbnail on the respective separator page 16.

The skilled person will understand that printed documents from the same mailbox may be differentiated from one another by means, for example, of an offset or a second type of separator page. For example, separator pages of A3 size may be used to separate and therefore indicate documents from different mailboxes while separator pages of A4 size, rotated through 90 degrees, are used to separate successively printed documents from the same mailbox.

Figure 5 is a schematic flow diagram of a routine for printing sheets from the print jobs in the mailboxes 26 using the printing apparatus 2 of Figure 1. The process begins by sending print jobs to the MFP 2. A print job can be any form of printable document, and includes information such as the username of the person that printed the document.

In step 100, a print job is prepared by a user, for example on a personal computer in the network. In step 102 a mailbox 26 is selected to print the document to. This step may be made by the user, for example the mailbox 26 may be selected by the user at the time of printing, or may be automatically carried out, for example by the mailbox 26 being pre-allocated to a particular user or group of users. Once the mailbox selection has been made, the document is printed to the MFP 2 in step 104. In step 106 a determination is made as to whether there are any more documents to print. If yes, this process of steps 100 to 104 is continued until all the required documents have been printed to mailboxes 26 on the MFP 2.

The process of steps 100 to 106 of printing these documents can be automatic. There may be a facility to check whether or not all the required documents have been printed to mailboxes 26 on the MFP 2. This can be done either by recording the number of print jobs that have been sent to an MFP 2 or by instructing the MFP 2 to check the print jobs that are in the mailboxes 26. This can be desirable since other users may accidentally have printed their documents to the wrong MFP mailboxes 26.

Print jobs sent to the MFP 2 can contain a flag or marker that indicates they are to be printed subsequently in the process. Marking the print jobs in this way means that it does not matter if other users are also printing to the mailboxes 26 on the MFP 2. Alternatively, a user may select only some of the print jobs in a mailbox for printing in an overnight batch run, for example. Such print job selection may be effected by attachment of a flag to the print job. Only marked print jobs would be printed by this process.

Once all the print jobs have been sent to the mailboxes 26, in step 108 a print out command is issued that triggers the printing out of all the documents in the mailboxes 26. This print out command can be sent to the MFP 2 in a number of forms. It can be a specific print command that instructs the MFP 2 to print the documents, for example being a simple command sent to the MFP 2 via the network connection on signal input 40. It can be a command that is triggered at a predetermined time recorded in the timer 38. This time could be entered via the user interface 36 of the MFP 2 or via a network connection on signal input 40. The command can also be triggered by the document counter 34, which causes the MFP to print the documents stored in the mailboxes 26 once a certain number of print jobs have been received in the mailboxes 26 by the MFP 2. The document counter 34 could be set via the user interface 36 of the MFP 2 or via a network connection on signal input 40.

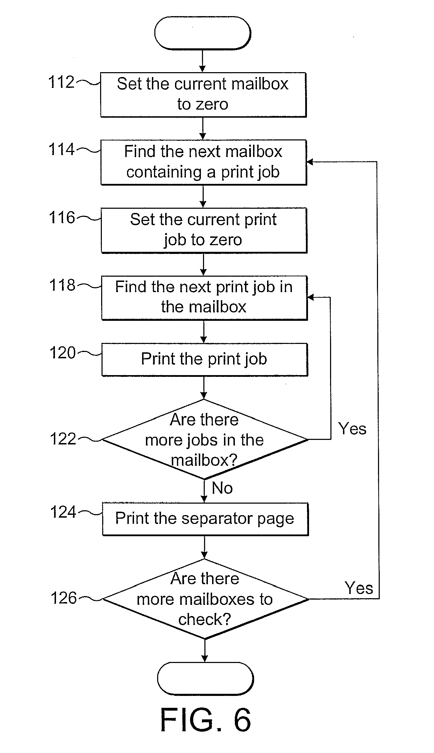

Once the print out command is issued, the print out from the mailboxes to cause printing of the document sheets is carried out in step 110. The sub-routine of step 110 is shown in Figure 6.

In step 112 the current mailbox 26 is set to zero, and in step 114 the first mailbox 26, mailbox 0, on the MFP 2 is checked to see if there are any print jobs. If the first mailbox does not contain any print jobs, the next mailbox is checked, until a mailbox containing a print job is found. In step 116 a counter for the print jobs in the mailbox 26 is set to zero. In step 118, the next print job in the respective mailbox 26 is found. Then in step 120 the current document is printed out onto the desired paper sheets. This step comprises sending the first print instruction from the control unit 20 to the printing engine 4 to print out all the first documents in the respective mailbox 26.

In the case where only documents corresponding to print jobs in the mailboxes 26 that are flagged are to be printed out, then an additional check is made for the flag before each document is printed out.

In step 122, it is determined whether there are any more print jobs in the respective mailbox 26. If yes, the steps 118 and 120 are repeated for one or more subsequent print jobs. If no, then the respective separator page 16 is printed in step 124. This step comprises the second print instruction from the control unit 20 to the printing engine 4 to print out the second document, or separator page, associated with the respective first documents in the respective mailbox 26.

Therefore after all of the first documents 14 to be printed from the respective mailbox 26 have been printed out, the corresponding separator page 16 is printed out.

Alternatively, the corresponding separator page 16 can be printed out before the respective documents 14.

Any additional processing to create the extra information on the separator page 16 can be performed at this point. This extra processing can be performed at the point at which each page of the printed document 14 is printed and then stored until the separator page 16 is printed out.

After the separator page 16 has been printed out, a determination is made in step 126 as to whether there are any further mailboxes 26 to check. If yes, then the subroutine returns to step 114 for the next mailbox 26 to be checked for a print job. Therefore, once the mailbox separator page 16 is printed out, the next mailbox 26 is checked for print jobs. Any documents in this later mailbox 26 are printed out followed by the next separator page 16. This process continues until all the required documents 14 have been printed. If no, then the printing is terminated.

Once all the documents 14 have been printed the print jobs can be deleted from the mailboxes 26.

Once all the documents 14 have been printed a final summary page (not shown) can be printed out which outlines all the statistics about the jobs that have been printed.

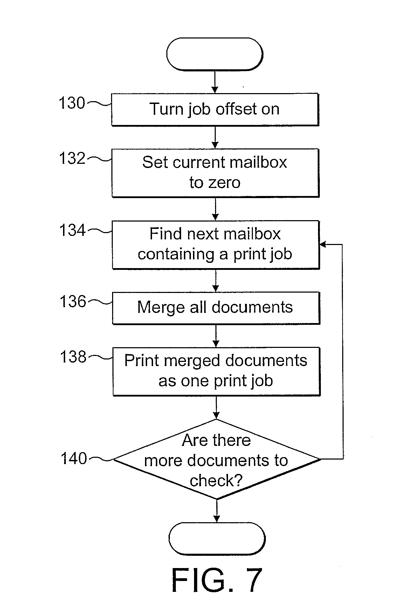

The documents 14 from different mailboxes may be differentiated using offsets rather than separator pages. For example, the job offset facility of Canon iR5000-6000i devices may be used. In this embodiment, the print jobs stored in each mailbox 26 are merged to form one print job. The sub-routine of step 110 is shown in Figure 7.

In step 130 the job offset facility is turned on, so that documents printed by the MFP are differentiated from each other by an offset. In step 132 the current mailbox 26 is set to zero, and in step 134 the mailbox 26 is checked to see if it contains any print jobs. If the first mailbox, mailbox 0, does not contain any print jobs, the next mailbox is checked, until a mailbox containing a print job is found. In step 136, all print jobs in the mailbox 26 are merged. Then in step 138 the merged print jobs are printed as one print job, thus avoiding the possibility of other print jobs interrupting the sequence of printed documents from a mailbox.

As with the previous embodiment, in the case where only documents corresponding to print jobs in the mailboxes 26 that are flagged are to be printed out, then an additional check is made for the flag before each document is printed out.

A determination is then made in step 140 as to whether there are any further mailboxes 26 to check. If yes, then the sub-routine returns to step 134 for the next mailbox 26 to be checked for a print job. Any print jobs in this later mailbox 26 are merged and printed as one print job. This process continues until all the required documents 14 have been printed. If no, then the printing is terminated.

It will be understood that an offset facility may be used without combining print jobs in each mailbox. For example, each document may be printed with a small offset between documents having the same identifier, and a larger offset between documents having identifiers which indicate a change of user group.

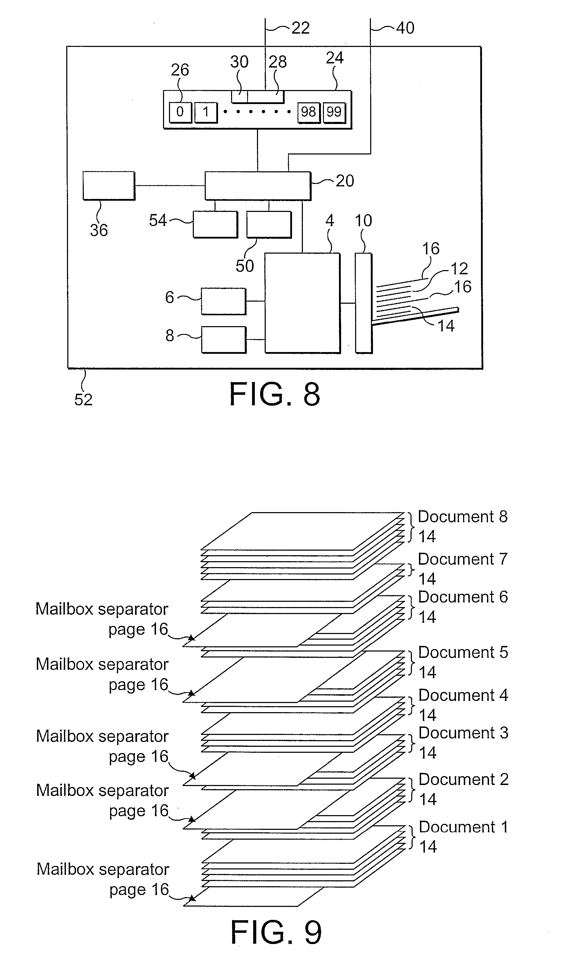

Figure 8 is a schematic block diagram of a printing apparatus in accordance with a third embodiment of the present invention. The printing apparatus of the third embodiment is a modification of the printing apparatus of the first embodiment illustrated in Figure 1. Like parts are identified with like reference numerals. The description of the common parts is not repeated in detail.

Referring to Figure 8, the printing apparatus, designated generally as 52, includes a comparator 50 connected to the control unit 20. The comparator 50 is adapted to compare the identifier of the first document received in the input 22 with the identifier of the first document in a previous first print job. The latter identifier is stored in a memory 54 connected to the control unit 20.

The printing apparatus 52 differs from that of the first embodiment of Figure 1 in that instead of the print jobs being cumulatively stored in the mailboxes 26, and then commonly printed out in a single composite printing operation, individual print jobs received into a respective mailbox 26 are immediately printed independently.

After each incoming print job has been assigned into the respective mailbox 26 in the manner described hereinabove for the embodiment of Figure 1, the comparator 50 is adapted to compare the identifier of the incoming document with that of the previously printed document that has previously been stored in the memory 54. In other words, the comparator 50 determines whether the document about to be printed is from the same user group as that of the previously printed document. If the compared identifiers are different, indicating a change of user group for successive documents, the control unit 20 sends a signal to the printing engine 4 to cause a separator page 16 to be printed. If the compared identifiers are the same, indicating the same user group for successive documents, the control unit 20 does not send such a signal to the printing engine 4 and so a separator page 16 is not printed, and successive documents 14 are printed and stacked adjacent to each other.

Successive documents originating from the same user group may be offset from one another, the separator pages clearly differentiating between the user groups. Alternatively, an offset may be used to differentiate between documents from different user groups; for example, a smaller offset may be used between successive documents originating from the same user group and a larger offset between documents having identifiers which indicate a change of user group.

Accordingly, in the third embodiment, although the print jobs are sent to mailboxes 26 in the MFP 2 as for the first embodiment, the print jobs are never actually stored in the mailboxes 26 for subsequent printing. Instead, the documents are immediately printed out after the respective print job has been received in the respective mailbox 26. A separator page 16 is only printed out or an offset is only initiated when a subsequent document comes from a different mailbox 26 to the previous document. Accordingly, a separator page 16 is selectively printed together with or an offset is selectively initiated with the associated first document 14, but only under defined conditions whereby a separator page 16 or an offset is required to separate documents 14 from different mailboxes 26.

The following example explains this procedure, with reference to Figure 9, which shows the output of the documents 14 and separator pages 16 on the stacker 10. Documents are printed to the MFP mailboxes 26 in any order. The following order is used in this example:
Document 1 - 5 pages to Mailbox 17
Document 2 - 5 pages to Mailbox 17
Document 3 - 4 pages to Mailbox 0
Document 4 - 4 pages to Mailbox 86
Document 5 - 5 pages to Mailbox 86
Document 6 - 5 pages to Mailbox 17
Document 7 - 3 pages to Mailbox 0
Document 8 - 6 pages to Mailbox 0

The documents 14 are all printed out immediately and a separator page 16 is printed out when a document comes from a mailbox 26 that is different to the previous document. As for the previous embodiment, the separator page 16 may be unprinted, or printed with information identifying or related to the respective mailbox 26, and optionally with thumbnail images of the corresponding printed documents. Accordingly, in the above example the separator pages 16 would be printed as follows:
Separator Page (for Mailbox 17)
Document 1 - 5 pages to Mailbox 17
Document 2 - 5 pages to Mailbox 17
Separator Page (for Mailbox 0)
Document 3 - 4 pages to Mailbox 0
Separator Page (for Mailbox 86)
Document 4 - 4 pages to Mailbox 86
Document 5 - 5 pages to Mailbox 86
Separator Page (for Mailbox 6)
Document 6 - 5 pages to Mailbox 17
Separator Page (for Mailbox 0)
Document 7 - 3 pages to Mailbox 0
Document 8 - 6 pages to Mailbox 0

The mailbox separator pages 16 should preferably be printed before the respective first documents 14 because otherwise the last set of first documents 14 would be printed without an associated separator page 16.

It will be apparent to those skilled in the art that a further embodiment of a printing apparatus in accordance with the present invention may comprise a combination of the two embodiments, in which for example the comparator 50 and memory 54 of Figure 8 are incorporated into the printing apparatus of Figure 1. The control unit may be adapted to enable a user to select, for example via the user interface 36, which mode of operation is to be employed, namely print job storage in the mailboxes for subsequent printing of cumulative documents, or printing of individual documents independently following receipt of the respective print job into the respective mailbox.

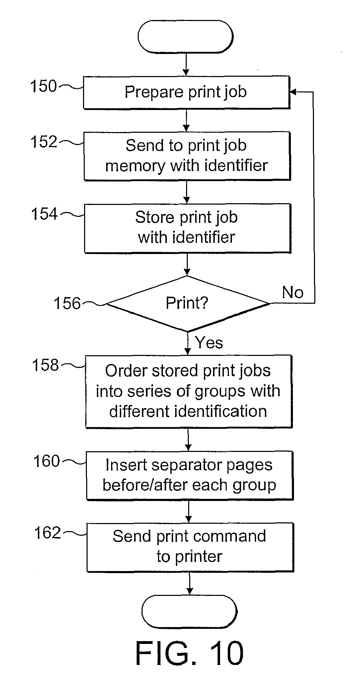

Figure 10 is a schematic flow diagram of a routine for producing a print command in a computer for sending to a printing apparatus in accordance with a fourth embodiment of the present invention. In this embodiment which is a modification of the embodiment of Figure 1, the print command is produced in a computer in a network computer system, and sent to a printer, rather than produced in a printing apparatus having a mailbox system. The present invention provides a computer program product for implementing this process in the computer system.

Referring to Figure 10, in step 150 a print job is prepared by a user, for example on their personal workstation. In step 152, the print job, with the associated identifier of the user or the user's group is then sent, under an instruction from the user, to a print job memory in the network computer system. Then in step 154 the print job together with the associated identifier is stored in the print job memory in the network computer system. Thereafter in step 156 a decision is made as to whether or not to print the document. This decision may be made after a number of print jobs have been stored by the same user or different users (similar to the first embodiment) or after only a single print job has been stored (similar to the second embodiment).

If no, a subsequent print job may be prepared again in step 150.

If yes, then in step 158 the print jobs in the print job memory are ordered into a series of groups of print jobs having different identifiers. In step 160 a separator page is inserted between each group. Finally, in step 162 a print command is sent for each first document and separator page to a printer in the computer network system. This causes the printer to print out the documents of each group together with the associated separator page. During printing, the printer is locked out thereby preventing other print jobs interfering with the sequence of printed documents.

Numerous modifications of the described embodiments will become apparent to the skilled person. For example, differentiation may be provided between documents from different groups of mailboxes. Mailboxes may be assigned to users, with the users assigned to categories, such as a department. Users' documents may then be assigned to the respective mailbox, and in a common printing operation differentiation may be provided, not only between mailboxes, but also between groups of mailboxes.

The present invention provides the advantage over known network printer systems and printing apparatus that documents from separate users or user groups can readily be separated without requiring a sorter in the multifunctional peripheral that prints out the documents. This can reduce the hardware cost of the multifunctional peripheral or printing apparatus as compared to known devices that require such a sorter to separate documents from different users.

Furthermore, the documents may be printed out automatically, in conjunction with an automatic determination as to whether they need to be separated from, in a visual manner, previously or subsequently printed documents.

By using a separator page to achieve the visual separation, additional useful information can be printed on the separator page for each group.

In addition, the present invention provides the advantage over known network printer systems and printing apparatus that a batch print, for example overnight, of documents for plural users or groups thereof can be prepared and the groups of documents still be separated from each other.

These advantages can also be provided either in a printing apparatus or multifunctional peripheral itself, or by programming a computer in a network system, so that this improved functionality may be achieved using a standard printing apparatus or multifunctional peripheral.

## Claims

1. A printing apparatus comprising:
an input for receiving a plurality of first documents in electronic form, each first document including an identifier of a respective one of a plurality of groups, and
a controller adapted to generate a first print instruction for printing each received first document with first differentiation means between successively printed first documents having a different identifier or category of identifier, the identifiers having been assigned to a plurality of categories, and without first differentiation means between successively printed first documents having the same identifier or category of identifier.

2. A printing apparatus according to claim 1 further comprising a data store for storing the first documents in electronic form, the data store having a plurality of data storage spaces; and a document sorter for assigning the first documents into a respective one of the storage spaces based on the respective identifier.

3. A printing apparatus according to claim 1 or claim 2 wherein the data store comprises a mailbox system and the data storage spaces comprise mailboxes, each mailbox receiving first documents having a respective identifier.

4. A printing apparatus according to claim 2 or claim 3 wherein the controller is adapted to sequentially check the plurality of data storage spaces to determine whether any first document is stored therein, and for each data storage space storing at least one first document, to send the respective at least one first document stored therein in a print instruction.

5. A printing apparatus according to any one of claims 2 to 4 wherein the controller is adapted to send a plurality of first documents in a data storage space to be printed in the order in which they were received into the data storage space.

6. A printing apparatus according to any one of claims 2 to 5 further comprising selection means for selecting at least one first document in a data storage space to be printed.

7. A printing apparatus according to any one of claims 2 to 6 wherein the controller is adapted to send the or each first document stored in each respective data storage space to be printed in the first print instruction for the respective data storage space.

8. A printing apparatus according to claim 7 wherein the controller is adapted to send sequentially a series of first print instructions, and each respective first print instruction is associated with first differentiation means, whereby all of the first documents stored in the data store to be printed are printed in a single printing operation, the first documents from each data storage space being printed in association with a respective first differentiation means.

9. A printing apparatus according to any one of claims 1 to 8 further comprising a user interface for the controller, and wherein the user interface is adapted to initiate the printing operation.

10. A printing apparatus according to any one of claims 1 to 9 further comprising a timer for the controller, and wherein the timer is adapted to initiate the printing operation.

11. A printing apparatus according to any one of claims 1 to 10 further comprising a document counter which counts the number of first documents in the data store, and wherein the controller is adapted to initiate the printing operation when a particular number of first documents has been received in the data store.

12. A printing apparatus according to any one of claims 1 to 11 further comprising a signal input for the controller for receiving input signals from a computer network, and wherein the controller is adapted to initiate the printing operation based on receipt of an input signal.

13. A printing apparatus according to claim 1 wherein the controller is adapted to send each first document in a print instruction independently.

14. A printing apparatus according to claim 1 or claim 13 further comprising a comparator, the comparator being adapted to compare, before the generating step, the identifier of the first document received in the input with the identifier of the first document in a previous first print instruction.

15. A printing apparatus according to claim 13 or claim 14 further comprising:
a data store for storing the first documents in electronic form, the data store having a plurality of data storage spaces, and
a document sorter for assigning the first documents into a respective one of the data storage spaces based on the respective identifier.

16. A printing apparatus according to claim 15 wherein the data store comprises a mailbox system of a printing apparatus and the data storage spaces comprise mailboxes, each mailbox receiving first documents having a respective identifier.

17. A printing apparatus according to claim 16 wherein the comparator is adapted, if the compared identifiers are different or belong to different categories, to cause first differentiation means to be inserted between said first documents and, if the compared identifiers are the same or belong to the same category, first differentiation means to not be inserted between said first documents.

18. A printing apparatus according to any one of claims 2 to 17 wherein the controller is adapted to combine, before generating a first print instruction, a plurality of first documents stored in a data storage space to form one first document.

19. A printing apparatus according to any preceding claim wherein the controller is adapted to print the first documents with second differentiation means between successively printed first documents having the same identifier or category of identifier.

20. A printing apparatus according to any preceding claim wherein at least one of the first and second differentiation means comprises an offset.

21. A printing apparatus according to claim 20 wherein the first differentiation means comprises a first offset, and the second differentiation means comprises a second offset, the first and second offsets being different.

22. A printing apparatus according to any one of claims 1 to 20 wherein at least one of the first and second differentiation means comprises a second document acting as a separator page.

23. A printing apparatus according to claim 22 wherein the first print instruction includes first information concerning at least one of a selected paper property or a selected paper tray in the printing apparatus, and wherein the controller is adapted to selectively generate a second print instruction for a second document in association with each first document, including second information concerning at least one of a selected paper property or a selected paper tray in the printing apparatus, the first and second information being different, the generation being dependent upon the identifier of the respective first document.

24. A printing apparatus according to claim 22 or claim 23 wherein the controller is adapted whereby each second document is printed after the respective first document or documents.

25. A printing apparatus according to any one of claims 22 to 24 wherein the second print instruction includes information that is determined by the respective identifier whereby the second document is printed with that information.

26. A printing apparatus according to claim 25 wherein the printed information includes the identifier.

27. A printing apparatus according to claim 25 or claim 26 wherein the printed information includes at least one image corresponding to information within the respective first print instruction.

28. A printing apparatus according to claim 27 wherein the at least one image comprises a reduced image of at least one image within the respective first document.

29. A printing apparatus according to any one of claims 23 to 28 wherein the first and second information respectively comprise first and second paper trays within the printing apparatus and the controller is adapted to select between the first and second paper trays for printing of the first and second documents respectively.

30. A printing apparatus according to any preceding claim further comprising a bin for receiving outputted paper, wherein the bin is a common bin into which all the printed first and second documents are received.

31. A method of operating a printing apparatus in a computer network, the method comprising the steps of:
receiving a plurality of first documents in electronic form, each first document including an identifier of a respective one of a plurality of groups, and
printing the received first documents with first differentiation means between successively printed first documents having a different identifier or category of identifier, the identifiers having been assigned to a plurality of categories, and without first differentiation means between successively printed first documents having the same identifier or category of identifier.

32. A computer program product comprising program code means which, when executed by a computer, performs the step of sending, on receipt of a print command, first documents in electronic form, each including an identifier of a respective one of a plurality of groups, to be printed with first differentiation means between successively printed first documents having a different identifier or category of identifier, the identifiers having been assigned to a plurality of categories, and without first differentiation means between successively printed first documents having the same identifier or category of identifier.
